# EUROPEAN PATENT APPLICATION

(11) **EP 1 241 488 A2**
(43) Date of publication of application: **18.09.2002**
(21) Application number: 02251875.7
(22) Date of filing: 15.03.2002
(51) Int. Cl.: G01V 3/15

(54) **Apparatus and method for analysing and mapping soil and terrain**

(30) Priority: 16.03.2001 GB 0106531
(71) Applicant: TurfTrax Group Limited, Salisbury, Wiltshire SP1 2AS (GB)
(72) Inventor: Smith, John Justin, Haynes West End, Bedford MK45 3RD (GB); Peters, Martin, Melbourne, Victoria 3984 (AU)
(74) Representative: Gymer, Keith Francis

(57) **Abstract**

An apparatus for analysing and mapping soil and/or terrain for physical and/or chemical properties thereof, comprises a sensor 1 for measuring conductivity of soil by electromagnetic induction, the device being movable over an area of ground to be analysed and mapped, a differential global positioning satellite (DGPS) receiver system 12 for determining the location of the sensor 1 on the area of the ground 30 to be analysed and mapped, and a personal computer (PC) 19 in communication with sensor 1 and DGPS system 12 for capturing the ground conductivity data from the sensor 1 in association with the determined location of the sensor 1 at which the conductivity data are obtained. The captured data can subsequently be used to generate soil maps of the area 30, showing variations in a range of soil parameters such as nutrients, pH, water content or soil type, from which improved ground management strategies can be developed.

## Description

The present invention relates to an apparatus and method for analysing and mapping soil and/or terrain for physical and/or chemical properties thereof. The expression "soil" includes turf and crop-bearing soil.

Soil and terrain analysis has traditionally required a choice between non-destructive, qualitative, testing, and destructive, quantitative, testing.

For example, testing sports turf for its physical properties has traditionally involved a simple qualitative determination by poking a stick or other sharp object into the turf and making an assessment as to how the turf would respond when the intended sporting activity takes place on it. Such a method is inherently inaccurate, unscientific, unreliable, subjective and unrepresentative of the total area, which will often exhibit substantial variations between different portions thereof. Moreover, it cannot easily produce a map or other record.

Quantitative testing of soil for water content, agrochemical content, organic content, rheology, acidity and the like has traditionally been confined to the laboratory or to quasi-laboratory field testing kits. All these quantitative tests are destructive, in that they require samples of the soil to be extracted and destructively processed. Moreover, the analysis of soil samples from different points of an area of ground cannot easily be extrapolated to produce a quantitative or semi-quantitative map or other record covering the whole area.

The cumulative result of these disadvantages has been that all sports taking place on grass have lacked accurate and current data concerning the turf and soil, on which groundsmen and others can base decisions concerning fertiliser application, irrigation planning and scheduling, seeding and mowing. In the agricultural sector, farmers have lacked accurate and current data concerning the composition and properties of the soil of fields, on which they can base decisions concerning grazing, crop rotation, fertiliser application, irrigation planning and scheduling, seeding and harvesting.

US Patent No. 5,654,637 (McNeill; 5 August 1997) describes a method for surveying terrain for buried objects, for example metal objects, or metal ores, using an apparatus for measuring conductivity of the soil by electromagnetic induction. The apparatus is mounted on a hand-drawn wheeled vehicle which travels over the area to be surveyed. Digitised output samples from the apparatus, representative of the conductivity of the terrain below the vehicle, are fed to a hand-held data logging unit and are processed to be plotted with respect to time or distance travelled, as the vehicle travels over the terrain.

The known surveying method is of limited application, and has not been applied to the analysis and mapping of soil and/or terrain for physical and/or chemical properties thereof.

The present invention aims to go at least some way towards overcoming the above disadvantages, or at least to provide an acceptable alternative analysing and mapping system.

According to a first aspect of the present invention, there is provided an apparatus for analysing and mapping soil and/or terrain for physical and/or chemical properties thereof, comprising:
(a) means for measuring conductivity of soil by electromagnetic induction, the said means being movable over an area of ground to be analysed and mapped;
(b) means for determining the location of the conductivity measuring means on the area of the ground to be analysed and mapped, relative to a datum remote from a path travelled by the conductivity measuring means; and
(c) means for receiving ground conductivity data from the conductivity measuring means and location data from the location determining means, and for processing the ground conductivity data in association with the determined location at which the conductivity data are obtained.
   The apparatus preferably further comprises one or both of:
(d) a processor programmed to control the (or other) location determining means to guide a worker to a target point of the area of ground, preferably after the target point has been selected for further soil analysis on the basis of the mapped ground conductivity data; and
(e) a processor programmed to convert captured ground conductivity data of the soil and/or terrain of the area of ground to another soil parameter by reference to a relationship, preferably established through further soil analysis performed on soil samples extracted from at least one target point selected on the area of ground, between the ground conductivity and the other parameter, and to map variations in the other parameter over the area of ground.

According to a second aspect of the present invention, there is provided a method of analysing and mapping soil and/or terrain for physical and/or chemical properties thereof, comprising:
(a) surveying an area of ground by moving over the ground means for measuring conductivity of soil by electromagnetic induction;
(b) mapping the output ground conductivity data from the conductivity measuring means according to the location at which the ground conductivity data are obtained; and
(c) converting the mapped ground conductivity data to another mapped parameter of the soil and/or terrain of the area of ground by reference to a relationship between the ground conductivity and the other parameter.

The method is preferably performed using the apparatus of the first aspect of the invention.

In the apparatus and the method of the first and second aspects of present invention the means for measuring conductivity of soil by electromagnetic induction preferably comprises a conductivity measuring device, most preferably including:
a transmitter coil;
a signal generator coupled to the transmitter coil to supply a time-varying (e.g. alternating or pulsed) current to the transmitter coil to cause the soil to be subjected to a primary electromagnetic field from the transmitter coil;
a receiver coil spaced from the transmitter coil; and
a signal processor coupled to receive signals from the receiver coil and from the signal generator, to separate the signal from the receiver coil from the signal from the signal detector, and to output ground conductivity data derived from the signal from the receiver coil.

Preferably the transmitter and receiver coils of the conductivity measuring device are disposed to be within about 30cm above the soil surface.

In the apparatus of the present invention, the means for determining the location of the conductivity measuring means on the area of the ground to be analysed and mapped relative to a datum remote from a path travelled by the conductivity measuring means preferably comprises a location determining device for determining, preferably to an accuracy of less than about 5 metres, most preferably to an accuracy of less than about 1 metre, the location of the conductivity measuring device on the earth's surface as the device is moved over the area of ground to be surveyed. The location determining device may suitably comprise a global positioning satellite (GPS) receiver system. More preferably the location determining device may comprise a differential GPS (DGPS) receiver. Most preferably it comprises a real time kinematic (RTK) DGPS receiver.

In the apparatus of the present invention, the means for receiving ground conductivity data from the conductivity measuring means and location data from the location determining means, and for processing the ground conductivity data in association with the determined location at which the conductivity data are obtained, preferably comprises a data processor programmed with capable data handling software. The hardware of this data processor may be the same as, or different from, hardware of the other processors mentioned above.

In the apparatus of the present invention, the data carrying portions of the apparatus are preferably adapted for reduction of signal interference caused by external electrical noise. In this regard, the apparatus may comprise one or more electrically shielded data carrying cables and/or opto-isolators

According to a third aspect of the present invention, there is provided the use of geographically mapped soil conductivity data, and data relating the soil conductivity data to another physical or chemical soil parameter at more than one target point on an area of ground to be surveyed, in order to prepare a soil and/or terrain map of the area showing variations in the said other parameter over the area.

The use preferably involves a processor programmed to map the other parameter of the soil and/or terrain of the area of ground by reference to a relationship, established through conventional soil analysis performed on soil samples extracted from at least one target point selected on the area of ground, between the ground conductivity and the other parameter. The selection of the target point(s) is preferably achieved using the apparatus of the first aspect of the invention.

According to further aspects of the present invention, there is provided a soil and/or terrain map showing variations in a soil parameter over an area of ground, obtained by the method or the use according to the invention, and a method of ground management performed by reference to such a map. Where the ground includes grass or crops growing thereon, said method of management may comprise planning fertiliser application, irrigation planning and scheduling, and seeding and mowing of the ground.

The surveying of the area of ground to be analysed and mapped is preferably carried out using a motorised vehicle, most preferably a rough terrain vehicle, on which the apparatus is mounted. The vehicle preferably comprises a non-motorised trailer, carrying at least those components of the apparatus which are sensitive to interference from electrical noise arising from the engine and electrical systems of the vehicle. In a particularly preferred embodiment of the apparatus of the invention, the transmitter and receiver coils of the conductivity measuring device are mounted on the trailer, to be within about 30 cm above the soil surface; the location determining device comprises a differential global positioning satellite (DGPS) receiver system, the antenna of which may preferably be mounted on the trailer; the data receiving and processing means comprises a suitably programmed personal computer (PC), e.g. ahandheld or laptop PC, which may preferably also be mounted on the motorised vehicle (the "field computer"); and the location guidance processor, when present, is preferably the same PC, suitably programmed to operate the same location determining device. The parameter converting processor, when present, is preferably a second suitably programmed computer remote from the surveyed area of ground (the "office computer").

### The Conductivity Measuring Device

The conductivity measuring device preferably operates by feeding a pulsed or alternating current (e.g. at a frequency of around 15 Hz) into the transmitter coil. The electromagnetic field from this current induces eddy currents in the soil which are related to the conductivity of the soil. The resulting secondary electromagnetic field from these induced eddy currents is sensed by the receiver coil, and gives rise to the signal which is fed from the receiver coil to the signal processor.

This secondary electromagnetic field may be in-phase or out-of-phase with the primary electromagnetic field from the current. Regions of the soil which have relatively high conductivity produce a secondary field which is substantially in-phase with the primary field. Conversely, regions of relatively low conductivity produce a secondary field which is substantially out-of-phase with the primary field. The degree of conductivity of a particular region of the soil governs the degree to which the induced secondary field is in-phase or out-of-phase with the primary field.

The phase relationship of the induced secondary field is reproduced in the signals fed from the receiver coil to the signal processor. These induced signal voltages have real (in-phase) components and quadrature (out-of-phase) components, relative to the phase of the primary field. By analysing the real and quadrature components of the signals received from the receiver coil relative to calibration and reference data, the signal processor calculates a best fit of conductivity data for the soil below the device up to about 120cm below the surface.

The conductivity measuring device preferably further includes a cancelling (or "nulling") signal generator coupled to the signal processor to supply a cancelling signal together with the signal from the signal generator, the cancelling signal substantially cancelling that component of the signal from the receiver coil which is a primary signal component transmitted directly from the transmitter coil. This enables the quadrature component of the signal from the receiver coil, which is particularly diagnostic of low conductivity soil regions, to be amplified by an amplifier without the amplifier being overloaded by the much larger in-phase component of the signal from the receiver coil.

The conductivity measuring device may further include additional coils, e.g. an additional receiver coil (see, e.g. US Patent No. 5,654,637).

A preferred example of the conductivity measuring device is the commercially available ground conductivity meter currently sold under the name EM38 by Geonics Limited, Missisauga, Canada (tel: +1 905 670 9580; e-mail: geonics@geonics.com; web: www.geonics.com). This device outputs conductivity data in real time (RT), as the data are generated. A particularly preferred form of the device is known as the EM38-DD device. This includes a dual dipole (DD), with the result that the physical orientation of the device relative to the ground is not critical to the conductivity measurements.

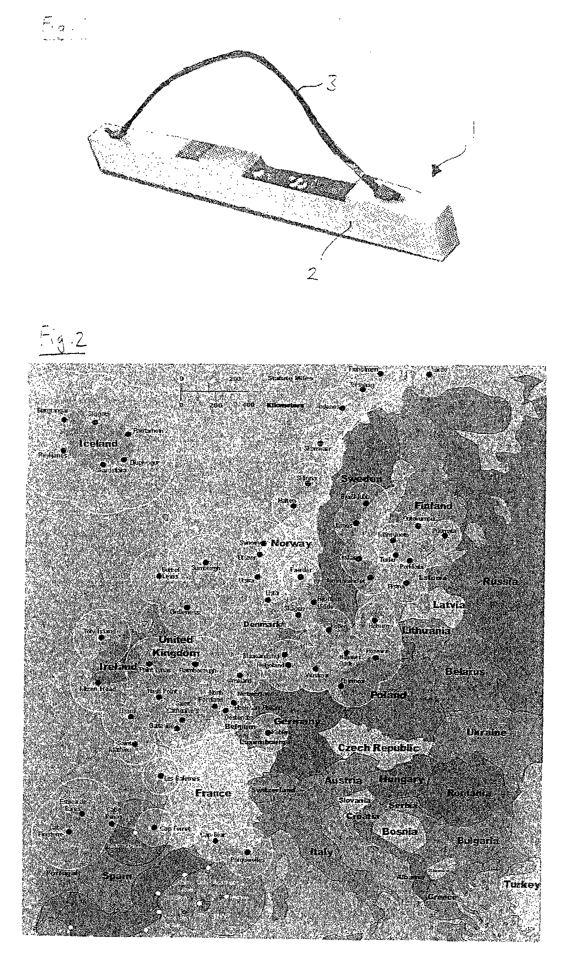

The EM38 device is portable, weighing about 3 kg. As shown in Figure 1 of the accompanying drawings, the device has the form of a long box. Inside the box a small transmitter coil and a small receiver coil are disposed at opposite ends of the device, together with the signal generator and signal processor, suitable electrical connections and terminals for transmission of the outputted soil conductivity data to remote printing or display instrumentation. Such a device is suitable for analysing soil to a depth ranging from about 20 to about 120cm, preferably about 100 cm, and outputting apparent ground conductivity in the range of about 100 to about 1000 millisiemens per metre (mS/m).

The conductivity measuring device may conveniently be powered by a conventional rechargeable DC battery, and most preferably the 12V DC lead/acid accumulator battery of the motorised vehicle when the device is mounted on the trailer of a motorised vehicle and trailer combination. Appropriate voltage regulators and noise suppression devices - particularly, appropriately shielded electrical cables - may be provided if necessary. For example, electromagnetic conductivity measuring devices (such as the EM38) typically operate at a maximum voltage of 9V DC. An appropriate voltage regulator may be connected between the battery and the conductivity measuring device to reduce the power supply voltage from 12V to 9V. Electrical connection to the battery ofthe motorised vehicle will suitably be achieved via conventional releasable electrical connectors.

For further information concerning the general technique of soil analysis by electromagnetic induction, the following references may be consulted:
"Electromagnetic Fields About a Loop Source of Current", by J Rhu, H F Morrison and S H Ward, *Geophysics* Vol. 35, No. 5, p. 862.
"Inductive Sounding of a Layered Earth With a Horizontal Magnetic Dipole", by A Dey and S H Ward, *Geophysics* Vol. 35, No. 4, p. 660.
"Electromagnetic Depth Sounder", by G T Inouye, H Bernstein and R A Gaal, IEEE Transactions on Geoscience Electronics, Vol. GE8, No. 4, p. 336.
"Determination of Depth of Shallowly Buried Objects by Electromagnetic Induction", by McFee and Chesney, IEEE Transactions on Geoscience and Remote Sensing, Vol. GE23, No. 1.
US Patent No. 5,654,637 (McNeill).

### The Location Determining Device

As noted above, the preferred location determining device comprises a differential GPS (DGPS) receiver mounted on the motorised vehicle. The DGPS receiver should be of a type that does not require earthing.

GPS involves the use of a series of orbiting global positioning satellites (NAVSTAR satellites) to establish geographical location of a receiver on the earth's surface. Non-differential GPS is generally accurate to within about 10-100m on the earth's surface, which is not a sufficiently high resolution for many of the purposes of the present invention. The error factors preventing higher resolution are primarily satellite clock errors, environmental/atmospheric interference, signal multipath reception errors and receiver induced errors.

In DGPS systems, correction data is derived from the pseudo range data of the satellites and from the location of a base station on the earth's surface. The correction data is transmitted from a beacon located at the base station and is received by a beacon receiver of the device simultaneously with the reception of the satellite signal. The correction data effectively eliminates errors deriving from the satellite clock and environmental/atmospheric effects, and enhances the resolution accuracy to comfortably within 5 metres on the earth's surface. This resolution is sufficient for the purposes of the present invention. The range of the beacon signal is typically up to about 200 km around a 360° arc, so that, although DGPS beacons are currently sited only at coastal locations, for primarily maritime use, many inland locations are within range.

The DGPS location determining device may therefore be broadly stated to comprise DGPS satellite signal and base-station beacon signal receivers, in association with a suitable power supply.

It is most preferred to use a real time kinematic (RTK) DGPS receiver system, where enhanced accuracy in the sub 1 metre range (accuracy of the order of centimetres) is desired.

The power supply for the location determining device is conveniently a conventional rechargeable DC battery, and most preferably the 12V DC lead/acid accumulator battery of the motorised vehicle on which the device is preferably mounted. Appropriate voltage regulators may be provided if necessary. Electrical connection to the battery of the motorised vehicle will suitably be achieved via conventional releasable electrical connectors.

The location determining device may generally further include conventional antennae and a housing for the electrical components.

A preferred example of the location determining device is the commercially available 8-12 channel DGPS beacon receiver unit currently sold under the name CSi GBX by Communication Systems International, Inc., Calgary, Canada (tel: +1 403 259 3311; e-mail: info@csi-dgps.com; web: www.csi-wireless.com).

### The Data Processor

The data processor of the apparatus of the present invention suitably comprises a computer programmed with data handling software to manipulate data captured from the data acquisition systems on the vehicle. This captured data is not normally displayed in map form for the end user, as ground conductivity as such is normally of relatively little interest to the end user. The present invention, however, makes use of the captured data in a number of ways, as described in more detail below. In summary, from a raw map of soil conductivity variations over the area, "zones" are initially identified within the area surveyed, within each of which a generally unitary soil type, composition or performance can be identified. The range of variability to be permitted in the definition of "generally unitary" for this purpose will depend on the level of resolution required in the ultimate soil map(s) of the area, and the amount of work and computer time to be expended. Within each zone, target points are identified for further soil analysis using conventional laboratory analysis techniques, and the optional location guidance software can be used to assist the location of these target points on the ground, for extraction of the samples. Then, using the optional parameter converting and mapping software, the end user is provided with a soil and/or terrain map showing the variations in a range of soil and/or terrain parameters between the zones of the area.

It is preferred that the field computer is a handheld personal computer (HPC) which can be moved with the conductivity measuring device over the area to be analysed. This field computer is coupled to the conductivity measuring device and the location determining device, whereby the conductivity and location data are captured simultaneously. Controlling software preferably coordinates the capture of the data through combining two ASCII data streams to a file. The connections to the conductivity measuring device and the location determining device are via any convenient form of electronic communication, and may include wireless connections. All signal-carrying connections should provide for electrical noise reduction. For example, appropriately shielded electrical cables should be used. At least the connection with the location determining device may conveniently include an opto-isolator, for reducing interference caused by electrical noise created by the vehicle engine and electrical systems.

The power supply for the data processor is conveniently a portable DC battery of a conventional type, typically a rechargeable sealed battery providing at least 12 hours of continuous use between charges.

Further preferred features of the optional features of the invention will be apparent from the detailed discussion below ofthe embodiments shown in the accompanying drawings.

By reference to analytical data obtained by separate physical and/or chemical testing of real samples, we have found that ground conductivity data can readily be converted to a range of parameters of the soil and/or terrain, according to the requirements of the user. Such parameters may include chemical parameters such as ionic (e.g. salt) content, acidity, agrochemical content, organic content or water content, or physical parameters such as relaxation time, drainage rate, pebble content, rheology or softness of clay soils. Soil classification in terms of textural classes etc. is also possible. In addition, geographically accurate locating of buried pipes and other installations is made much easier than hitherto, using the present invention.

The more data is initially captured from the area of ground in the soil conductivity measurements, and the more zones are created by the mapping processor during the initial processing, the more detailed will be the soil parameter maps ultimately provided to the end user.

The maps established using the present invention are generally detailed quantitative or semi-quantitative soil and/or terrain maps, which can be used for much improved ground care and management than has hitherto been possible.

The maps provide a variety of information concerning the area of ground, from which interpretation of the soil's hydraulic properties, chemical properties and mechanical properties can be made, and subsequently the appropriate management decisions can be made, in consultation with soil scientists and other specialists.

The information made available by the present invention may be extended to facilitate a remote area management strategy. This strategy may, for example, incorporate the use of soil and/or air sensors linked to telemetry capable logging technology, to transmit data received from the sensors. If desired, the software may include a historical, present ("real") and future time function, whereby the changes in the mapped parameter over time can be visualised as a time-referenced moving image. Specific information may, for example, be relayed back to a manager, providing him/her with daily information on the state and of the area of ground. The information may suitably be presented in both text and graphical form, with pre-programmed warnings for impending risks such as turf diseases and frost.

Examples of the practical ground management applications of the mapped soil and terrain data obtainable using the present invention include:
- the creation of management zones for the delineation of nutrient, pH and water management, cation exchange, irrigation design and scheduling, both in sport and agriculture;
- management of appropriate practice in construction and use of golf courses and other outdoor sports facilities;
- the creation and use of environmental and other relevant data associated with sporting events taking place on soil or turf, on which groundsmen and others can base decisions concerning fertiliser application, irrigation planning and scheduling, seeding and mowing;
- the delineation of sites for ground-based research in both field sports and agriculture;
- general mapping and surveying of soil and terrain, including mapping and surveying boundaries between soil types and detecting and mapping buried objects, e.g. utilities and land drains;
- the location of drainage systems based on an understanding of subsurface soil type;
- the location and calibration of sensors for the measurement of parameters including soil water levels, redox potential, soil temperature and pH;
- the location of soil sensors, based on an understanding of the specific conductivity ranges of the soil;
- soil classification; and
- salinity mapping.

For further illustration of the present invention, and to show how the invention may be put into effect, an embodiment will now be described, purely by way of example and without limitation, with reference to the accompanying drawings, in which:
Figure 1 shows a conductivity measuring device for use in the present invention;
Figure 2 shows a map of Europe, marked with the currently operational DGPS beacons;
Figure 3 shows in block diagrammatic form an apparatus for analysing and mapping soil and/or terrain for physical and/or chemical properties thereof, using the device of Figure 1;
Figure 4 shows schematically a method of analysing and mapping a soccer pitch for physical and/or chemical properties of the soil, using the apparatus of Figure 3;
Figure 5 shows (a) a high resolution (less than 6 metres between rows) dot map of soil conductivity measurements taken over the soccer pitch by the method shown in Figure 4, and (b) a contoured graphical presentation (map) of the same data;
Figure 6 shows a contoured graphical presentation (map) of the variations in soil composition over a different soccer pitch, calculated by conversion from high resolution soil conductivity data obtained by a method analogous to that shown in Figure 4;
Figure 7 shows contoured graphical presentations (maps), together with keys to the shading conventions, of the variations in (a) soil conductivity, (b) soil cation exchange, (c) soil pH and (d) soil potassium concentration over a hole of a golf course, the soil conductivity data being obtained at high resolution by a method analogous to that shown in Figure 4 and the other mapped parameters calculated by conversion from the soil conductivity data; and
Figure 8 shows a low resolution (24 metres between central rows; 6 metres between boundary rows) dot map of soil conductivity measurements taken over an agricultural field by a method analogous to that shown in Figure 4.

Referring to the drawings, an apparatus and a method for analysing and mapping soil and terrain for physical and/or chemical properties thereof are generally shown.

Referring to Figures 1, 3 and 4 in particular, the apparatus comprises a commercially available (Geonics Limited, Canada) EM3 8-DD device (referred to hereafter as "sensor" for simplicity) 1 for measuring conductivity of soil by electromagnetic induction, the sensor 1 comprising generally a long box 2 having an external carrying strap 3 and housing the coils, signal generator and signal processor (not shown) as described above and in the Operating Manual.

For use in the present invention, the sensor 1 is placed in a low-slung non-metallic (suitably polypropylene and fibre-glass) box trailer 4 towed behind a motorised rough-terrain vehicle 5, such as a quad-bike as illustrated, via a conventional towbar and ball hitch 6. The sensor 1 is oriented within the box trailer 4 so that it is parallel with the surface 7 of the ground to be surveyed, and generally no more than about 20 cm above the ground surface 7. The use of non-metallic vehicle parts in the vicinity of the sensor is important, to minimise distortion of the measurements.

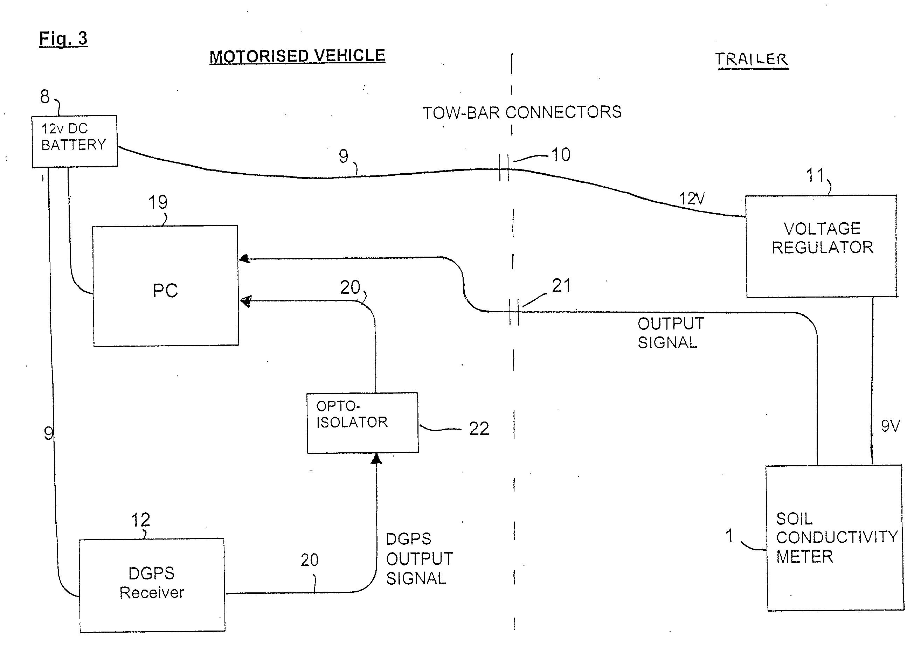

The EM38 sensor 1 operates at a voltage of 9V DC, and in the apparatus illustrated this power is supplied from the lead/acid accumulator battery 8 of the rough-terrain vehicle 5, connected to the device via standard shielded electrical cables 9, standard electrical connectors 10 at the hitching point of the towbar 6 to the rough-terrain vehicle 5, and a standard voltage regulator 11 to adjust the voltage from the 12V DC of the accumulator battery 8 (see Figure 3).

The sensor 1 is initially prepared for use by following the standard calibration and set-up test routines prescribed for the device in question. For example, for the EM38 sensor these include battery testing, initial phase nulling, instrument zeroing, final inphase nulling, and optionally phasing and sensitivity checking (for further details the reader is referred to the EM38 Operating Manual produced by Geonics Limited - contact details above). The EM38 sensor (DD form) accommodates both dipoles simultaneously, so that the physical orientation of the device in the box trailer is not critical to the measurements. Where dipole-sensitive equipment is alternatively used, a selection between vertical dipole orientation and horizontal dipole orientation must also be made when setting up the sensor 1.

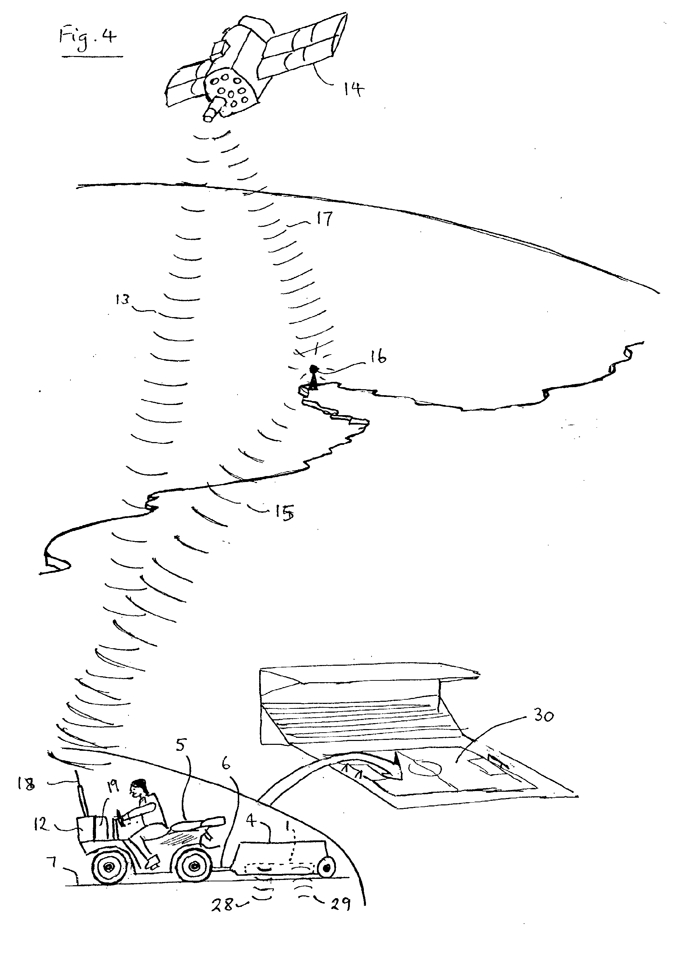

In use (Figure 4), the sensor 1 operates by transmitting an electromagnetic field 28 to the ground via a transmitter coil, and receiving a secondary (induced) electromagnetic field 29 from the ground via the receiver coil. By analysing the corresponding primary and secondary electrical signals, the ground conductivity is measured, as described above.

Referring now particularly to Figures 2, 3 and 4, the apparatus further includes a device for determining the geographical location of the sensor 1 as the rough terrain vehicle/trailer combination 4/5 moves over the area of ground to be analysed.

The geographical location determining device is a DGPS, preferably a real time kinematic (RTK) DGPS, receiver system 12 mounted on the rough terrain vehicle 5, comprising standard commercially available receivers (not shown) for the signal 13 transmitted by the DGPS satellite 14 and the (correction data) signal 15 transmitted by the base station coastal beacon 16 in response to the signal 17 received by the base station from the satellite, a display for monitoring DGPS data, and an appropriate antenna 18 (which may alternatively (not shown) be mounted on the trailer 4, which may be advantageous in terms of reducing electrical noise interference).

The DGPS receiver system 12 operates at a voltage of 12V DC, and in the apparatus illustrated this power is supplied from the lead/acid accumulator battery 8 of the rough-terrain vehicle 5, connected to the DGPS receiver system via standard electrical cables 9 (see Figure 3).

The apparatus further comprises a field computer comprising a PC 19 and associated screen, the PC programmed with suitable software operable in Win 9x/NT or CE format, providing a data processor in communication with the sensor 1 and the DGPS receiver system 12, for processing the two (soil conductivity and geographical location) data streams in combination, to associate the soil conductivity from the sensor 1 with the location of the sensor 1 within the area of ground being surveyed. The PC 19 is a conventional waterproof portable or palmtop computer (generically known as a handheld personal computer (HPC)) mounted, e.g. in a secure cradle, on the rough terrain vehicle 5 with the screen visible to the driver of the vehicle. The PC is suitably operated by its own internal rechargeable battery, in order to minimise the risk of signal interference from electrical noise arising from the electrics of the rough terrain vehicle.

The software acquires data from the sensor 1 and the DGPS system 12, and has capability for drawing points, lines, rectangles, circles, regions and text, for implementing attributes and characteristics to layers and locations, for finding locations, for calculating distances and areas, and for operating in low cost or portable computer systems. The software provides for a monitoring window 25 to be displayed on the PC screen, whereby the quality of the data streams from the DGPS receiving system 12 and from the sensor 1 can be monitored in real time by the driver of the rough terrain vehicle 5.

The data output from the sensor 1 is fed to the PC 19 via standard electrical cables 20 and standard electrical connectors 21 at the hitching point of the towbar 6 to the rough-terrain vehicle 5, and standard (e.g. RS-232) connectors at the PC 19, with shielding of the data stream from external electrical interference in known manner.

The data output from the DGPS receiver system 12 is fed to the PC 19 via standard electrical cables 20 and connectors (e.g. RS-232 9-pin connectors), and via a standard opto-isolator 22 for reducing the adverse effects of external electrical interference on the quality of the data stream, particularly interference arising from the motor and electrical components of the rough terrain vehicle 5.

The apparatus of the present invention is highly sensitive to electrical interference, and the driver of the rough terrain vehicle 5 should preferably take care to minimise the number and size of metallic objects worn or carried.

The procedure for operating the apparatus in the method of the present invention will now be described, with particular reference to Figures 2 and 4 to 8.

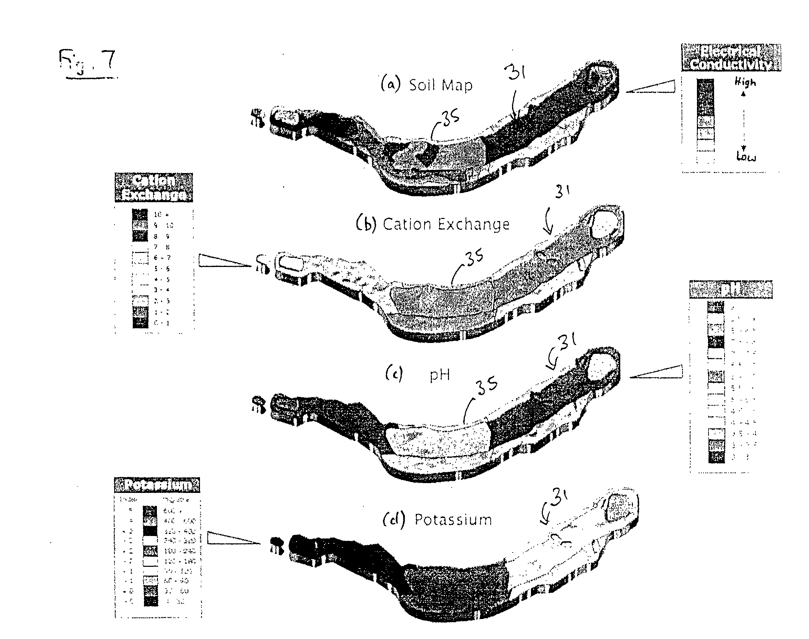

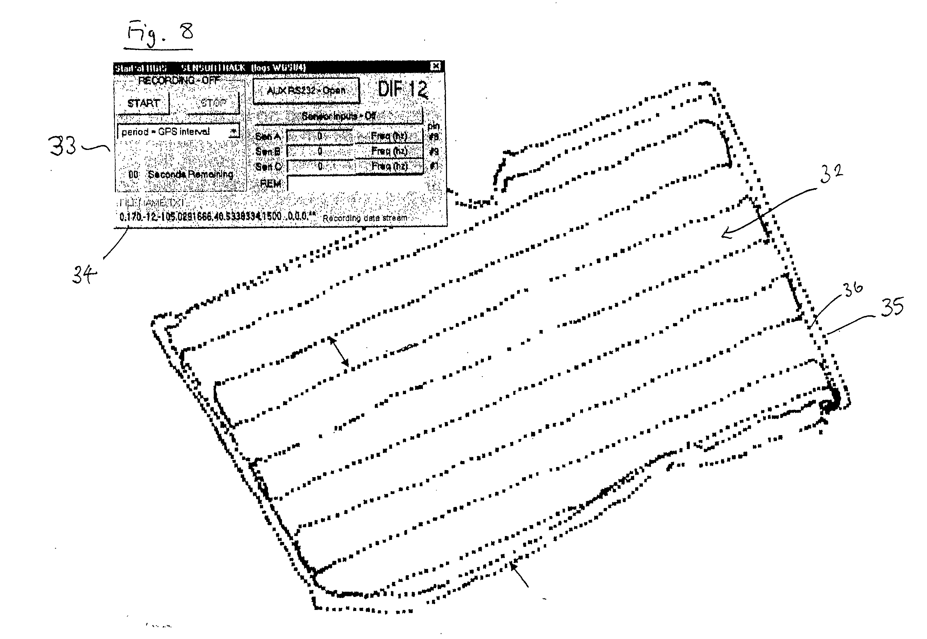

The sensor 1 is first calibrated and set up, according to the manufacturer's recommendations, and is allowed to warm up for a period of approximately 30 minutes prior to field data acquisition. In the procedure illustrated in Figures 4 to 6, a soccer pitch 30 within range of a DGPS base station 16 is analysed and mapped for soil characteristics. In the procedure which results in the map illustrated in Figure 7, a hole 31 of a golf course within range of a DGPS base station 16 is analysed and mapped for soil characteristics. In the procedure which results in the map illustrated in Figure 8, an agricultural field 32 within range of a DGPS base station 16 is analysed and mapped for soil characteristics. See Figure 2 for details of the current European DGPS base stations.

On invoking the software for the first time (for example, by double tapping the icon on the PC screen or following the start menu links in Win 9x/NT) the software invites the user to set the configuration of the system. This configuration procedure allows the setting of BAUD rate for serial port communications, sensor selection, data logging frequency and GPS port usage (e.g. 9600 BAUD rate for the scanner port of the PC, and 4800 BAUD rate for the DGPS port). The sensor track recording period is suitably set to the GPS interval, and the auxiliary data port of the PC is suitably set to receive sensor 1 data. The configuration file is saved for all subsequent data acquisition events, and the system logging sequence is initialised.

The PC 19 is checked for secure mounting to the rough terrain vehicle 5, and the DGPS receiver system 12 is actuated. The DGPS receiver system 12 will then seek valid position status based on its last use. This may involve the seeking of a DGPS base station (beacon transmitter) that is now out of range. Therefore, before field data acquisition commences, the nearest beacon transmitter to the location of the intended field work should be selected.

The software incorporates a capability for displaying a sensor track window 33 on the screen of the PC 19, whereby the driver of the rough terrain vehicle 5 can continuously monitor the progress of the data capture as the surveying procedure is performed. At the initial start-up of the apparatus, once an adequate DGPS signal and an adequate data stream from the sensor 1 have been established, a data stream presentation 34 will be displayed at the base of a sensor track window 33. The DGPS signal to noise ratio and the sensor track window 33 should be monitored throughout field data acquisition, allowing the driver to take remedial action during weak GPS signal events.

In particular, the signal to noise ratio of the reception of the beacon transmission signal 15 is indicated on an inbuilt display of the DGPS receiver system. If the signal to noise ratio falls below 13, some GPS drift may be experienced, and if this situation persists, a different beacon transmitter should be selected. The number of satellites with which the DGPS receiver system is in contact and the differential status are generally displayed on the sensor track software window 33, and should differential be lost, it will be necessary to stop the rough terrain vehicle, to allow re-acquisition of a beacon transmission signal 15. In the example illustrated in Figure 8, the notation DIF 12 indicates that the DGPS receiver system is currently in contact with 12 satellites and that differential status is established (i.e. that the system is in contact with the beacon transmitter 16).

Data acquisition starts when a file name is selected during the sensor track initialisation sequence, outlined above. Upon selection of the file, logging commences according to the configuration settings of the software.

To map the area of ground 30, 31, 32, the driver of the rough terrain vehicle 5 must follow a well defined procedure. Initially, the boundary 35 of the area 30, 31, 32 is travelled, as closely to the edge of the area as is possible. Generally this is easy. However, where hedge maintenance is lacking, or where the terrain is very rough or grass or bushes very dense, some alterations to the boundary path taken by the vehicle may be necessary to avoid equipment damage and personal injury.

Following the initial mapping of the boundary 35, a secondary boundary 36 is mapped in like manner, 6 metres inside the first mapped boundary 35. This high resolution boundary mapping allows edge effects (e.g. from metallic objects such as wire fences or fence posts) to be interpreted during subsequent data processing. Following the mapping of the secondary boundary 36, linear sampling is then undertaken in forward and back alternating rows, passing across the area of ground 30, 31, 32 in a row spacing appropriate to the survey being performed. Generally speaking, low resolution surveys in rows spaced about 24 metres between adjacent passes of the vehicle are appropriate for general agriculture (e.g. field 32), medium resolution surveys in rows spaced about 12 metres between adjacent passes of the vehicle are appropriate for general agriculture and trial sites, and high resolution surveys in rows spaced less than or equal to about 6 metres (e.g. between about 2 and about 6 metres) between adjacent passes of the vehicle are appropriate for trial sites or sports areas (e.g. soccer pitches 30 and golf courses 31). This sequence is illustrated in Figure 8, where the double boundary method followed by a 24 metre linear sampling event is shown.

Upon completion of the mapping of the double boundary, and the linear spacing acquisition, data capture is stopped, resulting in the data file created being stored to computer memory. The software allows the appending of further data to every file, should logging cease and be recommenced. This option is generally only used as a result of interruptions or breakdowns, and means that one file per field is possible at all times.

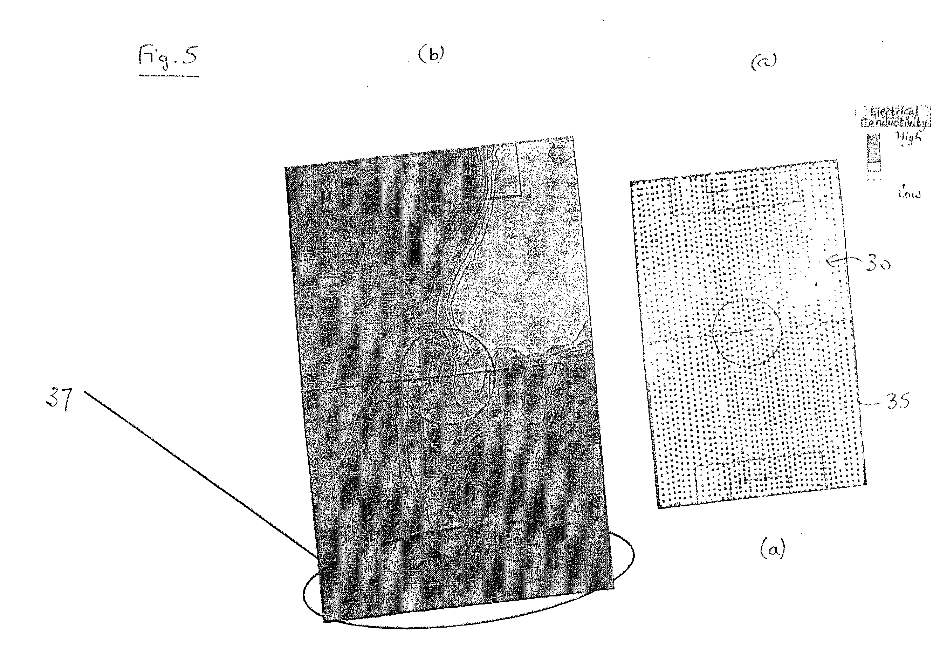

The captured interrelated ground conductivity and DGPS location data is then transmitted, e.g. via e-mail or direct file transfer protocol to reserved Internet file space, for processing on an office computer operating geographical mapping and parameter conversion software. It is this processing, in combination with specific traditional analysis techniques performed on selected soil samples extracted from within the surveyed area, that yields the visualised maps for a variety of soil parameters other than conductivity, illustrated in Figures 5 to 8. It is preferred that the processing of the captured data, described below, is performed immediately, so that the driver of the rough terrain vehicle can, if necessary, extract the desired soil samples from the target points identified, and thus complete all the field work on an area of ground in a single work period.

An important function of the office computer software is smoothing of the data, known as krigging. This uses known statistical methods for interpolating the spatially variable data, and providing a best fit for lines of similarity based on the interrogation of a set number of points surrounding each other, but not exceeding a specific distance from a pivotal point. In essence, for every point of data, a number of surrounding points are considered in the statistical analysis. These settings are versatile, and for the purposes of the present invention, at least 75 surrounding points are used, up to 100 metres of the pivotal point under interrogation. For higher resolution, the distance would be reduced below 100 metres, and for greater smoothing, a larger distribution of points above 75 would be considered in each calculation.

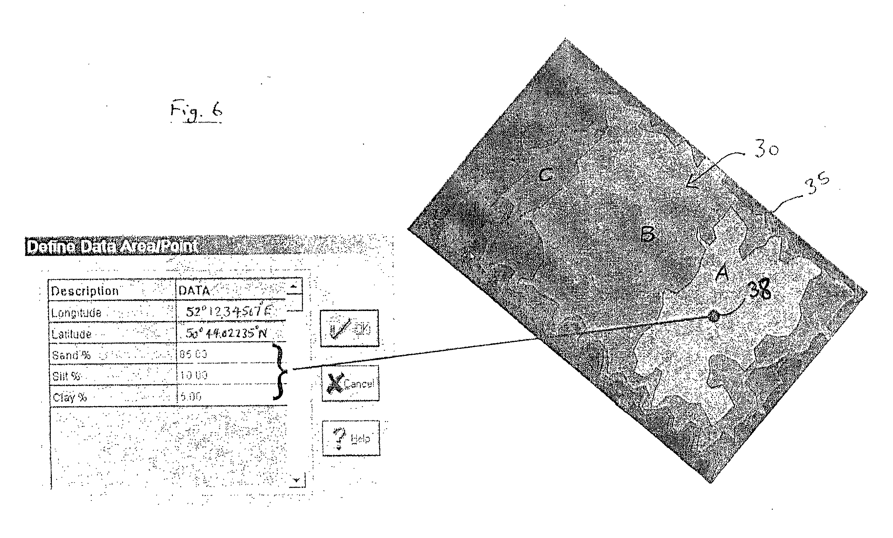

In the initial processing of the captured conductivity data related to the geographical location of the data on the area of ground, the area is "zoned" according to groups of conductivity data possessing a generally unitary character. The degree of variation allowed within a zone (three are marked A, B, C by way of example in Figure 6) will depend on the end user's requirements and the cost of the project, because a greater number of zones, while enhancing the accuracy and resolution of the resulting soil maps, will require correspondingly greater computer processing time, soil sample extraction work and laboratory analysis work. The data processing zones established at this stage will correspond to the "management zones" depicted on the final maps of the ground area according to the desired chemical and/or physical parameters.

Once the zones have been established, target points within some or all of the zones are identified, such as the target region 37 identified in the soccer pitch illustrated in Figure 5, or the target point 38 identified in zone A of the soccer pitch illustrated in Figure 6. Geographical information pertaining to the target points is then provided back to the field worker, so that the field worker at the survey area can locate the target points.

More particularly, as shown in Figure 6, data for a target point are transmitted to a secure Internet file, from where they may be downloaded to the field computer as latitude and longitude data (preferably accurate to 0.00001 minutes of arc on the earth's surface). If desired, software incorporating directional compass processing may be used, to make the location of the target points easier for the field worker. It is then the task of the field worker to extract the samples for shipment to the laboratory for analysis of the soil for a variety of parameters. To do this, the field worker preferably uses the DGPS receiver system 12 in conjunction with the compass based direction-finding navigation software, to home in accurately on a selected target point.

Soil sampling suitably involves the extraction, by Dutch auger, of soil from two or three depths at a target point. Soil is extracted by turning and pressing down on the auger in a clockwise direction. Typical depths at which soil is extracted is from 0 - 30cm, 30 - 60 cm and 60 - 90cm. If only two depths are to be sampled, it is generally convenient to identify the boundary between topsoil and subsoil zones (subsoil is generally noticeable by a visible change in soil colour or texture, and may be delineated by a change in the ease of auguring caused by compaction) and extract one sample from each zone.

All extracted soil samples are preferably placed in sealed plastic bags, and identified by their target point reference. These samples are then preferably couriered to a soils analytical laboratory for the relevant analyses to be carried out according to known analysis techniques.

The result of this sampling and laboratory analysis procedure is a library of data showing the relationship, at the particular site surveyed, between - on the one hand - the mapped soil conductivity readings obtained by the linear survey using the apparatus and the rough terrain vehicle and - on the other hand - a range of soil parameters, including or sand/silt/clay proportions (as shown in Figure 6) and soil nutrient status such as nitrogen (N), phosphorus (P), potassium (K), magnesium (Mg) and pH in their respective scientific units (as shown in Figure 7). N, P, K and Mg will generally be presented in mg/l or ppm and pH on the scale of pH from 1 to 14, where 1 represents highly acidic, 14, highly alkaline, and 7 neutral.0

By mapping the desired soil parameter geographically over the area of ground, as shown for example in Figure 7, extremely useful maps of the area are created, on which much more informed ground management and use decisions can be taken, than was hitherto the case.

## Claims

1. An apparatus for analysing and mapping soil and/or terrain for physical and/or chemical properties thereof, comprising:
(a) means for measuring conductivity of soil by electromagnetic induction, the said means being movable over an area of ground to be analysed and mapped;
(b) means for determining the location of the conductivity measuring means on the area of the ground to be analysed and mapped, relative to a datum remote from a path travelled by the conductivity measuring means; and
(c) means for receiving ground conductivity data from the conductivity measuring means and location data from the location determining means, and for processing the ground conductivity data in association with the determined location at which the conductivity data are obtained.

2. An apparatus according to claim 1, further comprising a processor programmed to control location determining means to guide a worker to a target point of the area of ground.

3. An apparatus according to claim 1 or claim 2, further comprising a processor programmed to convert captured ground conductivity data of the soil and/or terrain of the area of ground to another soil parameter by reference to a relationship between the ground conductivity and the other parameter, and to map variations in the other parameter over the area of ground.

4. An apparatus according to any one of the preceding claims, wherein the means for measuring conductivity of soil by electromagnetic induction comprises a conductivity measuring device including:
a transmitter coil;
a signal generator connected to the transmitter coil to supply a time-varying current to the transmitter coil to cause the soil to be subjected to a primary electromagnetic field from the transmitter coil;
a receiver coil spaced from the transmitter coil; and
a signal processor connected to receive signals from the receiver coil and from the signal generator, to separate the signal from the receiver coil from the signal from the signal detector, and to output ground conductivity data derived from the signal from the receiver coil.

5. An apparatus according to any one of the preceding claims, wherein the location determining device comprises a global positioning satellite (GPS) receiver.

6. An apparatus according to any of the preceding claims, wherein the apparatus is mounted on a motorised vehicle with those components of the apparatus that are sensitive to interference from electrical noise being disposed on the vehicle remotely from the engine and other parts of the vehicle likely to cause electrical interference.

7. A method of analysing and mapping soil and/or terrain for physical and/or chemical properties thereof, comprising:
(a) surveying an area of ground by moving over the ground means for measuring conductivity of soil by electromagnetic induction;
(b) mapping the output ground conductivity data from the conductivity measuring means according to the location at which the ground conductivity data are obtained; and
(c) converting the mapped ground conductivity data to another mapped parameter of the soil and/or terrain of the area of ground by reference to a relationship between the ground conductivity and the other parameter.

8. A soil and/or terrain map showing variations in a soil parameter over an area of ground, obtained by a method as defined in claim 7.

9. A method for management of an area of ground performed by reference to a soil and/or terrain map as defined in claim 8.

10. Use of geographically mapped soil conductivity data of an area of ground to be surveyed, and data relating the soil conductivity data to another physical or chemical soil parameter at more than one target point of the area, in order to prepare a soil and/or terrain map of the area showing variations in the said other parameter over the area.
